**Europäisches Patentamt**

**European Patent Office**

**Office européen des brevets**

(19)

(11) Publication number: **0 204 458**
**B1**

# EUROPEAN PATENT SPECIFICATION

(12)

(45) Date of publication of the patent specification:
**29.06.88**

(21) Application number: **86303784.2**

(22) Date of filling: **19.05.86**

(51) Int. Cl.⁴: **F 15 B 15/06**

(54) Actuator for converting linear movement into rotary movement and vice versa.

(30) Priority: **05.06.85 US 741467**

(43) Date of publication of application:
**10.12.86 Bulletin 86/50**

(45) Publication of the grant of the patent:
**29.06.88 Bulletin 88/26**

(84) Designated Contracting States:
**DE FR GB**

(56) References cited:
**DE-A-1 926 869**
**FR-A-2 250 058**
**US-A-2 883 144**
**US-A-3 602 478**
**US-A-3 911 793**

(73) Proprietor: **GENERAL MOTORS CORPORATION,**
**General Motors Building 3044 West Grand**
**Boulevard, Detroit Michigan 48202 (US)**

(72) Inventor: **Kayyod, Fariborz, 5060 Stonespring Way,**
**Anderson Indiana 46011 (US)**
Inventor: **Stuart, Richard Joseph, 1701 Greenway**
**Drive, Anderson Indiana 46011 (US)**
Inventor: **Ogden, Jeffrey Dan, RR No. 2, Box 226D,**
**Anderson Indiana 46011 (US)**

(74) Representative: **Breakwell, John Neil Bower, GM**
**Patent Section Vauxhall Motors Limited Luton**
**Office (F6) P.O. Box No. 3 Kimpton Road, Luton**
**Bedfordshire LU2 OSY (GB)**

LIBER, STOCKHOLM 1988

## Description

This invention relates to an actuator for converting linear movement into rotary movement, and vice versa, as specified in the preamble of claim 1, for example as disclosed in US-A-2 883 144.

In actuators of the type having a diaphragm or piston the linear movement of which is converted into rotary movement of an output member, and vice versa, for pressure-produced or pressure-producing action respectively by the diaphragm or piston, it is known, for example from the aforesaid US-A-2 883 144, to employ a helical coupling therebetween for effecting such conversion of movement. Various designs of a helical coupling for effecting such motion conversion have been proposed, but they are normally complicated in design and require many parts and considerable time in their assembly, especially when, as in the case of the aforesaid US-A-2 883 144, the helical coupling extends through an aperture in the diaphragm and requires a sealing arrangement to ensure fluid-tightness between the opposite sides of the diaphragm.

The present invention is concerned with the provision of an actuator having an improved, integrated design of helical coupling for effecting - totally within the actuator - the conversion of linear movement of the diaphragm or piston into rotary movement of the output member, and vice versa.

To this end, an actuator in accordance with the present invention is characterised by the features specified in the characterising portion of claim 1.

In a specific embodiment of an actuator in accordance with the present invention, the helical coupling comprises a simple coupling member that is insert-moulded in the diaphragm or piston so as to both extend therethrough and interlock therewith, thereby avoiding the normal need for attachment with plates and fasteners. The coupling member is provided with a helix which extends from one side of the diaphragm or piston and slidably engages in a slot which in one embodiment is directly in the output member. The coupling member further has a combined guide and anti-rotation portion which extends from the other side of the diaphragm or piston and engages with a stationary mating member so as to guide linear movement while preventing rotational movement of the coupling member, whereby linear movement of the diaphragm or piston forces linear non-rotational movement of the coupling member and thereby rotary movement of the output member, and vice versa.

In another embodiment, the helix slidably engages in a slot in a sector gear which meshes with a pinion or other gear connected to the output member to turn the same.

In the drawings:

Figure 1 is a longitudinal sectional view, with parts in elevation, of one preferred form of an actuator in accordance with the present invention, showing a diaphragm therein in a normal position;

Figure 2 is a view similar to figure 1 but showing the diaphragm in an actuating position;

Figure 3 is a view on the line 3-3 of Figure 2, in the direction of the arrows;

Figure 4 is an enlarged view on the line 4-4 of Figure 2, in the direction of the arrows;

Figure 5 is a longitudinal sectional view of another preferred form of an actuator in accordance with the present invention, showing the diaphragm therein in its normal position;

Figure 6 is a fragmentary view on the line 6-6 of Figure 5, in the direction of the arrows;

Figure 7 is a view similar to Figure 5 but showing the diaphragm in an actuating position;

Figure 8 is a view on the line 8-8 of Figure 7, in the direction of the arrows;

Figure 9 is a view on the line 9-9 of Figure 5, in the direction of the arrows; and

Figure 10 is a view on the line 10-10 of Figure 7, in the direction of the arrows.

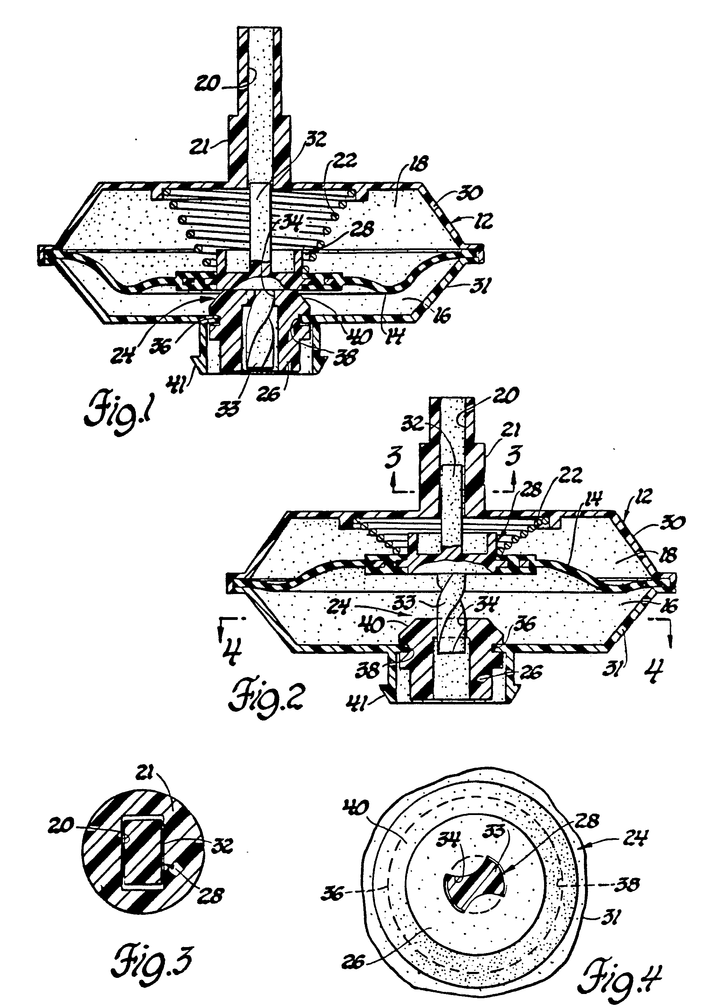

With reference now to Figure 1 of the drawings, there is shown a vacuum-type fluid pressure-operated actuator constructed in accordance with the present invention for use in a vehicle heating and/or air conditioning system to operate a pivotal air flow control door or valve (not shown).

The actuator generally comprises a two-piece injection-moulded plastics casing 12 whose interior is divided by means of an elastomeric diaphragm 14 into a pair of chambers 16 and 18. The lower chamber 16 is vented to atmosphere, and the upper chamber 18 is communicable with engine vacuum via a passage 20 through a nipple 21 integral with the casing. The diaphragm 14 is normally biased by a conical helical spring 22 to the one extreme position shown in Figure 1 when the chamber 18 is at or near atmospheric pressure, but on the establishment of a subatmospheric pressure (vacuum) therein the resulting differential air pressure forces the diaphragm upwardly against the spring bias to an actuating position as shown in Figure 2. As the diaphragm moves upwardly, a helical coupling assembly generally designated 24 converts such linear diaphragm motion into rotary motion of an output member 26 that is rotatably supported in the lower end of the casing and is adapted to be connected externally thereof to the device to be operated, in this case the previously mentioned air flow control door.

As regards the details of the helical coupling assembly 24, there is a coupling member 28 that is preferably made of injection-moulded plastics material and is insert-moulded in the diaphragm 14 centrally thereof so as to extend therethrough and interlock therewith while preventing fluid from passing from one side of the diaphragm to the other between the chambers 16 and 18. The resulting sub-assembly comprising the diaphragm 14 and the coupling member 28 is simply assembled in the casing 12 by compressing the periphery of the diaphragm between upper and lower casing parts 30 and 31, which are then ultrasonically welded together.

The coupling member 28 has a centrally located, integral upwardly extending stem 32 of rectangular cross-section that is slidable in the fluid passage 20, which is located coaxially therewith. The passage 20 is formed with a corresponding cross-section (see Figure 3) so as to require the coupling member 28 and thereby the diaphragm 14 to slide linearly (vertically in Figures 1 and 2) without rotation, and with there being sufficient clearance in this sliding fit so as not to significantly impede air communication therethrough with the chamber 18.

In addition, the coupling member 28 has a centrally located integral helix 33 of double-fluted cross-section that extends downwardly from the other side of the diaphragm and slidably engages in a slot 34 of similar cross-section formed in the top end of the rotary output member 26 (see Figure 4). The rotary output member 26 is rotatably mounted and axially retained in the case concentrically with the coupling member by being provided with an annular groove 36 which is snap-fittingly received in an aperture 38 centrally located in the lower casing member 31, the upper end of the output member being provided with a chamfer 40 to ease such snap-fitting assembly. The lower casing member is also formed with a snap-fit collar 41 that extends about the output member and is adapted to attach the actuator relative to the device to be actuated.

With the guide and anti-rotation stem 32 positively preventing any rotation of the diaphragm sub-assembly when vacuum is applied to the chamber 18, only linear travel of the diaphragm assembly is possible (thus, without rotation), and such linear travel results in rotation of the output member 26 by operation of the helix 33 in the slot 34, with the amount of rotary motion being thus directly proportional to the amount of vacuum supply. Then when the vacuum is relieved, the spring 22 operates to return the actuator to its normal position shown in Figure 1.

Different degrees of rotation of the output member can be obtained by simply providing the helix 33 with different thread pitches. In addition, by simple reversal of the thread twist of the helix, the actuator can be made to provide clockwise or counterclockwise rotation as desired.

Figure 5 of the drawings shows another form of vacuum-type fluid pressure-operated actuator constructed in accordance with the present invention and for similar use to that shown in Figures 1 to 4. The actuator again generally comprises a two-piece injection-moulded plastics casing 112 the interior of which is divided by means of an elastomeric diaphragm 114 into a pair of chambers 116 and 118. The lower chamber 116 is vented to atmosphere, and the upper chamber 118 is communicable with engine vacuum via a passage 120 through a right-angle nipple 121 integral with the upper side of the casing. The diaphragm 114 is normally biased by a conical helical spring 122 to the position shown in Figure 5 when the chamber 118 is at or near atmospheric pressure, but on the establishment of a vacuum in the chamber 118 the resulting differential pressure forces the diaphragm upwardly against the spring bias to an actuating position as shown in Figure 7. As the diaphragm moves upwardly, a helical coupling assembly generally designated 124 converts such linear motion into rotary motion of an output member 126 that is rotatably mounted on the lower side of the casing and is adapted to be connected to the device to be operated.

As regards the details of the helical coupling assembly 124, there is a coupling member 128 that is preferably made of injection-moulded plastics material and is insert-moulded in the diaphragm 114 centrally thereof so as to extend therethrough and interlock therewith while preventing fluid from passing from one side of the diaphragm to the other between the chambers 116 and 118. The sub-assembly comprising the diaphragm 114 and the coupling member 128 is simply assembled in the casing by compressing the periphery of the diaphragm between upper and lower casing parts 130 and 131, which are then ultrasonically welded together.

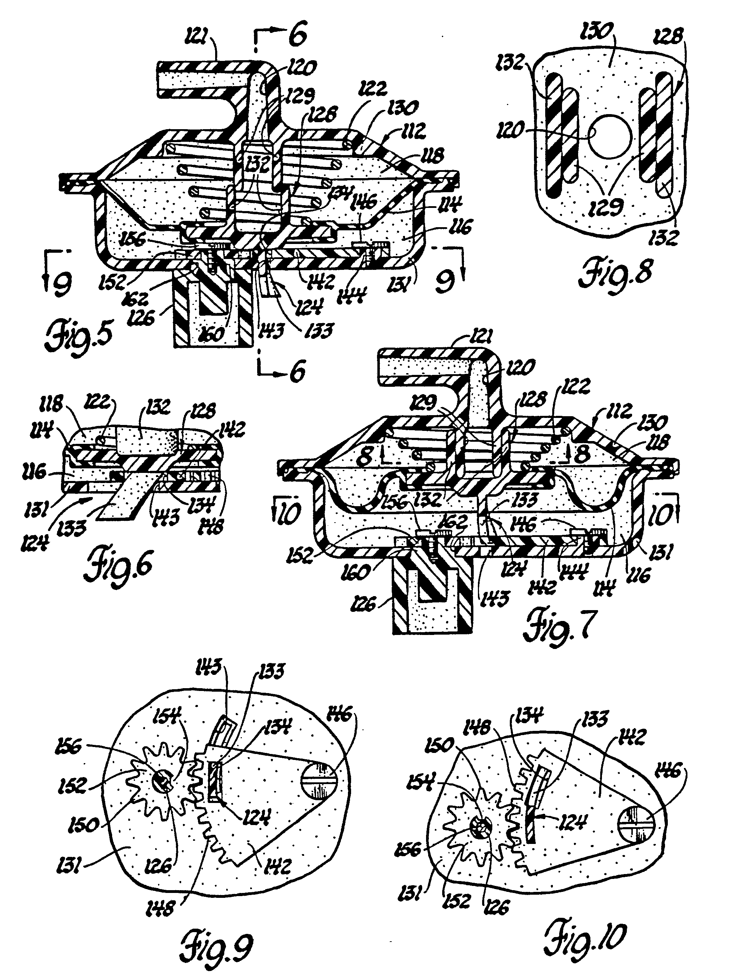

In this embodiment, the coupling member 128 and thereby the diaphragm 114 is constrained to move linearly without rotation by two parallel stems 132 that are formed integral with, and extend upwardly from, the coupling member 128. The stems 132 are received between, and slide along, parallel guide posts 129 formed integral with, and extending downwardly from, the upper casing part 130 at opposite sides of the passage 120. The posts 129 and stems 132 are of generally rectangular cross-section, as is seen in Figure 8, to prevent rotation of the coupling member and leave the passage 120 fully open to the chamber 118 rather than having communication through a clearance fit as in the Figure 1 embodiment.

In addition, the coupling member 128 has a centrally located integral helix 133 of generally rectangular cross-section extending downwardly from the other side of the diaphragm. The helix 133 slidably engages in a slot 134 of rectangular shape formed in the side of a sector gear 142 and extends therepast with clearance through an arcuate slot 143 in the side of the lower casing half 131. The sector gear 142 is rotatably mounted on the inner side of the lower casing half 131 on a post 144 formed integral therewith and is retained thereon by a screw 146. Teeth 148 on the sector gear 142 mesh with teeth 150 of a substantially smaller-diameter-pitch pinion gear 152 that is secured by a tongue and groove joint 154 and a screw 156 to the output member 126. The output member 126 has a round collar 160 that is rotatably mounted in a round hole 162 in the lower casing half 131, and is retained therein by the small gear 152, which is thus also rotatably supported thereby.

With the guide and anti-rotation stem 132 positively preventing any rotation of the diaphragm sub-assembly, when vacuum is applied to the chamber 118 only linear travel of the diaphragm assembly is possible, and the resulting rotation of the output member 126 by operation of the helix 133 in the slot 134 turns the sector gear 142, with the latter in turn turning the other gear 152 connected to the output member, the amount of output rotary motion thus being directly proportional to the amount of vacuum supply. Then when the vacuum is relieved, the spring 122 operates to return the actuator to its normal position.

Different degrees of rotation of the output member can be obtained by simply providing the helix 133 with different thread pitches. Further, different degrees of rotation of the output member can also be obtained by simply providing the gears 142 and 152 with different-diameter pitches. In addition, by simply reversing the thread twist of the helix 133, the actuator can be made to provide clockwise or counterclockwise rotation as desired.

## Claims

1. A linear to rotary actuator in which a helical coupling is connected between a fluid pressure-operated diaphragm (14) and another member (26) to convert linear movement of the fluid pressure-operated diaphragm (14) into rotary movement of the said other member (26), a coupling member (28) is joined to the diaphragm (14) in a central region thereof and so as to extend therethrough, a portion of the coupling member (28) forms an element (33) of the helical coupling, and another portion of the coupling member (28) comprises a combined guide and anti-rotation portion (32) that slidably engages a stationary guide (21) so as to guide linear movement of the coupling member (28) while preventing rotational movement thereof, characterised in that the element of the helical coupling which is formed by a portion of the coupling member (28) comprises a helix (33) that extends from one side of the diaphragm (14) into slidable engagement with a slot (34) in the said other member (26) so as to effect rotary movement of the said other member (26) on linear non-rotational movement of the diaphragm (14) and coupling member (28), and that the combined guide and anti-rotation portion (32) of the coupling member (28) extends from the other side of the diaphragm (14).

2. An actuator according to claim 1, characterised in that the coupling member (28) forms an insert moulded in the diaphragm (14) so as to interlock therewith while preventing fluid from passing from one side of the diaphragm (14) to the other.

3. An actuator according to claim 1 or 2, characterised in that the said other member (26) comprises an output member of the actuator.

4. An actuator according to claim 1 or 2, characterised in that the said other member comprises a rotatably mounted sector gear (142), and a rotatably mounted second gear (152) meshes with the sector gear (142) and is connected to an output member (126) of the actuator, whereby linear non-rotational movement of the diaphragm (114) and coupling member (128) causes operation of the helix (133) in the slot (134) to turn the sector gear (142), which thereby turns the second gear (152) to effect rotary movement of the output member (126).

5. An actuator according to claim 4, characterised in that the second gear (152) is a pinion gear of smaller pitch diameter than the sector gear (142).

## Patentansprüche

1. Ein Linear/Rotations-Betätiger, bei dem eine Wendelkupplung zwischen einer fluiddruckbetätigten Membran (14) und einem anderen Glied (26) zum Wandeln von Linearbewegung der fluiddruckbetätigten Membran (14) in Rotationsbewegung des anderen Gliedes (26) verbunden ist, ein Kupplungsglied (28) mit der Membran (14) in einem Zentralbereich derselben verbunden ist, um sich so dadurch zu erstrecken, ein Abschnitt des Kupplungsgliedes (28) ein Element (33) der Wendelkupplung bildet, und ein anderer Abschnitt des Kupplungsgliedes (28) einen kombinierten Führungs- und Drehfesthaltungs-Abschnitt (32) umfaßt, der gleitend an einer stationären Führung (21) angreift, um so Linearbewegung des Kupplungsgliedes (28) zu führen unter Verhinderung einer Drehbewegung desselben, dadurch gekennzeichnet, daß das Element der Wendelkupplung, das durch einen Abschnitt des Kupplungsgliedes (28) gebildet ist, eine Wendel (33) umfaßt, die sich von der einen Seite der Membran (14) in Gleiteingriff mit einem Schlitz (34) in dem anderen Glied (26) so erstreckt, daß eine Rotationsbewegung des anderen Gliedes (26) durch lineare Nicht-Rotationsbewegung der Membran (14) und des Kupplungsgliedes (28) bewirkt wird, und daß der kombinierte Führungs- und Drehfesthaltungs-Abschnitt (32) des Kupplungsgliedes (28) sich von der anderen Seite der Membran (18) weg erstreckt.

2. Betätiger nach Anspruch 1, dadurch gekennzeichnet, daß das Kupplungsglied (28) einen in die Membran (14) eingeformten Einsatz bildet, um so Form- und Kraftschluß damit zu schaffen, und gleichzeitig Fluid daran zu hindern, von der einen Seite der Membran (14) zur anderen durchzutreten.

3. Betätiger nach Anspruch 1 oder 2, dadurch gekennzeichnet, daß das andere Glied (26) ein Ausgangsglied des Betätigers umfaßt.

4. Betätiger nach Anspruch 1 oder 2, dadurch gekennzeichnet, daß das andere Glied einen drehbar angebrachten Zahnradsektor (142) umfaßt und daß ein drehbar angebrachtes zweites Zahnrad (152) mit dem Zahnradsektor (142) kämmt und mit einem Ausgangsglied (126) des Betätigers verbunden ist, wodurch lineare Nicht-Drehbewegung der Membran (114) und des Kupplungsgliedes (128) Betätigung der Wendel (133) in dem Schlitz (134) verursacht, um den Zahnradsektor (142) zu drehen, welcher dadurch das zweite Zahnrad (152) zur Bewirkung einer Rotationsbewegung des Ausgangsgliedes (126) dreht.

5. Betätiger nach Anspruch 4, dadurch gekennzeichnet, daß das zweite Zahnrad (154) ein Ritzel mit kleinerem Teilkreisdurchmesser als der des Zahnradsektors (142) ist.

## Revendications

1. Actionneur linéaire rotatif, dans lequel un accouplement hélicoïdal est interposé entre un diaphragme (14) actionné par une pression de fluide et un autre élément (26) pour transformer le mouvement linéaire du diaphragme (14) actionné par une pression de fluide en un mouvement rotatif dudit autre élément (26), un élément d'accouplement (28) est assemblé au diaphragme (14) dans une région centrale de celui-ci et de manière à le traverser, une partie de l'élément d'accouplement (28) forme un élément (33) de l'accouplement hélicoïdal, et l'autre partie de l'élément d'accouplement (28) comprend une partie combinée (32) formant guide et élément d'immobilisation en rotation, qui coopère par glissement avec un guide fixe (21) de manière à guider le mouvement linéaire de l'élément d'accouplement (28) tout en s'opposant au mouvement de rotation de cet élément, caractérisé en ce que l'élément de l'accouplement hélicoïdal qui est formé par une partie de l'élément d'accouplement (28) comprend une hélice (33) qui fait saillie sur une face du diaphragme (14) pour entrer en prise par glissement avec une fente (34) dudit autre élément (26) de façon à déterminer un mouvement rotatif dudit autre élément (26) en réponse à un mouvement linéaire non rotatif du diaphragme (14) et de l'élément d'accouplement (28) et en ce que la partie combinée (32) de l'élément d'accouplement (28) qui forme guide et élément d'immobilisation en rotation fait saillie sur l'autre face du diaphragme (14).

2. Actionneur selon la revendication 1, caractérisé en ce que l'élément d'accouplement (28) forme un insert moulé dans le diaphragme (14) pour être solidaire de celui-ci tout en empêchant le fluide de passer d'un côté du diaphragme (14) à l'autre.

3. Actionneur selon la revendication 1 ou 2, caractérisé en ce que ledit autre élément (26) constitue un élément de sortie de l'actionneur.

4. Actionneur selon la revendication 1 ou 2, caractérisé en ce que ledit autre élément comprend un secteur denté (142) monté rotatif, et un deuxième élément d'engrenage (152) monté rotatif engrène avec le secteur denté (142) et est relié à un élément de sortie (126) de l'actionneur, de sorte que le mouvement linéaire non rotatif du diaphragme (114) et de l'élément d'accouplement (128) provoque la mouvement de l'hélice (133) dans la fente (134) pour faire tourner le secteur denté (142) qui, de cette façon, fait tourner le deuxième élément d'engrenage (152) afin d'effectuer le mouvement rotatif de l'élément de sortie (126).

5. Actionneur selon la revendication 4, caractérisé en ce que le deuxième élément d'engrenage (152) est un pignon de diamètre inférieur à celui du secteur denté (142).

Fig.1

Fig.2

Fig.3

Fig.4

Fig.5

Fig.8

Fig.6

Fig.7

Fig.9

Fig.10

3